# EUROPÄISCHE PATENTSCHRIFT

(11) **EP 1 582 174 B1**
(45) Veröffentlichungstag und Bekanntmachung des Hinweises auf die Patenterteilung: **29.04.2015**
(21) Anmeldenummer: 05405268.3
(22) Anmeldetag: 24.03.2005
(51) Int. Cl.: A61C 8/00, A61B 17/32

(54) **Stanze**
Punching machine
Poinçonneuse

(30) Priorität: 02.04.2004 CH 5702004
(43) Veröffentlichungstag der Anmeldung: 05.10.2005
(73) Patentinhaber: SIC Invent AG, 4055 Basel (CH)
(72) Erfinder: Schilli, Wilfried, Prof.Dr.med., 79100 Freiburg (DE)
(74) Vertreter: Bohest AG

(56) Entgegenhaltungen:
- US-A- 5 951 287
- US-A1- 2003 022 132
- PATENT ABSTRACTS OF JAPAN Bd. 018, Nr. 086 (C-1165), 14. Februar 1994 (1994-02-14) & JP 05 293124 A (TDK CORP), 9. November 1993 (1993-11-09)

## Beschreibung

Die Erfindung betrifft eine Stanze zur Entnahme eines Gewebezylinders aus der Gingiva gemäss dem Oberbegriff des unabhängigen Patentanspruchs.

Bei der zahnprothetischen Versorgung mit Hilfe eines Implantats wird zunächst der Kieferknochen präpariert (z.B. wird eine Bohrung mit Innengewinde im Kieferknochen erstellt)und anschliessend wird das Implantat gesetzt (z.B. durch Eindrehen eines Implantats mit Aussengewinde in das zuvor im Knochen erstellte Innengewinde). Anschliessend wird das Implantat mit einer Einheilkappe abgedeckt und die Gingiva wird wieder verschlossen. Es schliesst sich nun die sogenannte "Einheilphase" an, in der das Implantat genügend stabil im Kieferknochen verankert wird, weil die Primärstabilität des Implantats unmittelbar nach dem Setzen nicht notwendigerweise in allen Fällen ausreicht, um die teilweise doch sehr grossen Kräfte, die beim Kauen auftreten, zuverlässig in den Kieferknochen einleiten zu können. Diese Einheilphase dauert typischerweise etwa 1-3 Monate an.

Am Ende der Einheilphase muss das im Kieferknochen verankerte Implantat eine ausreichende Sekundärstabilität aufweisen, da es dann - wie bereits erwähnt - die beim Kauen auftretenden, zum Teil sehr hohen Kräfte zuverlässig in den Kieferknochen einleiten können muss, ohne dass die Verankerung im Kieferknochen darunter leidet.

Nach abgeschlossener Einheilphase wird mit dem Implantat ein sogenanntes "Abutment" (Konnektor) verbunden, auf welches dann zur endgültigen Versorgung die eigentliche Suprakonstruktion, z.B. eine Krone aus Keramik auf metallischem Grundgerüst, aufgesetzt wird. Die auf das Abutment aufgesetzte Krone wird ebenfalls mit dem Implantat verbunden, typischerweise mit Hilfe einer Schraube, oder auch durch Zementieren.

Um bei einer subgingivalen Implantation nach der Einheilphase mit der prothethischen Versorgung fortschreiten zu können, muss man zunächst wieder einen Zugang zu dem in den Knochen eingeheilten Implantat erstellen. Dies erfolgt in der Regel durch eine chirurgische Eröffnung der Gingiva mittels einer Inzision mit Hilfe eines Skalpells und anschliessendem Aufklappen der Gingiva. Da man vor der Eröffnung der Gingiva anhand eines Röntgenbildes kaum zuverlässig feststellen kann, ob das Implantat inzwischen ausreichend stabil in den Knochen eingeheilt ist, kann man dies nach der Eröffnung der Gingiva am Implantat selbst noch einmal überprüfen. Ist dies nicht der Fall, wird die Gingiva wieder verschlossen und die Einheilphase wird verlängert. Am Ende der verlängerten Einheilphase wird dann die Gingiva erneut eröffnet, etc..

Alternativ zu der Eröffnung der Gingiva durch Inzision mit Hilfe eines Skalpells kommen in Fällen, in denen nach der Einheilphase der Alveolarkamm genügend breit ist auch sogenannte Gingivastanzen zum Einsatz. Mit solchen Stanzen kann ein Gewebezylinder aus der Gingiva entnommen werden. Eine bekannte Stanze umfasst dabei einen Stanzzylinder, der an seinem distalen Ende eine Schneide aufweist. Im Innern - zumindest im Bereich des distalen Endes - ist der Stanzzylinder hohlzylindrisch ausgebildet. Der Stanzzylinder weist ferner eine Durchgangsbohrung auf, die sich vom proximalen Ende des Stanzzylinders ausgehend in axialer Richtung erstreckt, bis sie in den hohlzylindrisch ausgebildeten distalen Endbereich einmündet. Ferner umfasst die Gingivastanze eine stiftförmige Sonde, die so ausgebildet ist, dass sie - mit ihrem distalen Ende voraus - am proximalen Ende des Stanzzylinders in dessen Durchgangsbohrung eingebracht und durch diese durchgeführt werden kann, bis ihr distales Ende aus dem distalen Ende des Stanzzylinders herausragt.

Vor dem Stanzen der Gingiva kann zunächst mit Hilfe der am äussersten distalen Ende der Sonde vorgesehenen Sondenspitze eine entsprechende zentrale Bohrung der Einheilkappe des Implantats aufgesucht werden. Dieses Aufsuchen kann - aus Gründen der besseren Handhabbarkeit - mit der Sonde alleine, also noch ohne den Stanzzylinder, erfolgen. Ist die Bohrung in der Einheilkappe aufgefunden worden, kann das distale Ende der Sonde weiter in die Bohrung der Einheilkappe eingebracht werden, bis eine Zentrierung der Sonde erfolgt ist. Nun kann beispielsweise die entsprechende Stelle markiert und die Stanze wieder herausgezogen werden. Dann wird die Sonde durch die Durchgangsbohrung des Stanzzylinders hindurch geführt, bis das distale Ende der Sonde aus dem distalen Ende des Stanzzylinders herausragt.

Nun wird mit Hilfe der Sondenspitze an der markierten Stelle erneut die zentrale Bohrung in der Einheilkappe aufgesucht, und nach deren Auffinden wird das distale Ende der Sonde wieder in die Bohrung der Einheilkappe eingebracht, bis die Sonde zentriert ist. Damit ist auch gleichzeitig der Stanzzylinder zentriert und es kann mit Hilfe des Stanzzylinders ein Gewebezylinder aus der Gingiva ausgestanzt werden.

Beide zuvor beschriebene Vorgehensweisen (chirurgische Eröffnung der Gingiva durch Inzision mittels Skalpell; Ausstanzen eines Gewebezylinders mittels Stanze) sind zwar grundsätzlich gangbare Wege, weisen aber noch Verbesserungsmöglichkeiten auf.

So erfolgt bei der beschriebenen Variante mit Skalpell stets eine Eröffnung der Gingiva in einem Bereich, der immer deutlich grösser ist als es der eigentliche Zugang zum Implantat erfordern würde. Ist das Implantat genügend stabil verankert, kann die Einheilkappe aus dem Implantat ausgedreht und das Abutment (Konnektor) eingedreht werden. Sodann wird die Gingiva um das Abutment herum verschlossen (vernäht), was regelmässig zu einem guten, allerdings eher selten zu einem optimalen kosmetischen Ergebnis führt.

Stellt sich ausserdem nach der Eröffnung der Gingiva heraus, dass das Implantat nicht genügend stabil im Kieferknochen verankert ist, muss die Gingiva erneut verschlossen (vernäht) werden und das ganze Prozedere zu einem späteren Zeitpunkt - nach einer verlängerten Einheilphase - wiederholen. Dies ist für den Patienten belastend.

Bei der beschriebenen Variante mit der Gingivastanze wird zwar die Gingiva nur genau in dem Bereich entfernt, wo der Zugang zum Implantat erforderlich ist. Allerdings kann sich auch hier nach dem Ausstanzen des Gewebezylinders herausstellen, dass das Implantat nicht genügend stabil im Kieferknochen verankert ist und die Gingiva muss erneut verschlossen werden, was sich nun insofern schwieriger darstellt, als bereits ein Gewebezylinder "ausgestanzt" wurde, um den Zugang zum Implantat zu erhalten. Die Stanze muss bis auf den Knochen, der unmittelbar neben dem Implantatrand liegt, geführt werden. Dabei muss erheblicher Druck ausgeübt werden. Der direkt um das Implantat liegende Knochen kann dabei geschädigt werden, was u.U. zu einer Resorption dieses wichtigen Knochenanteils führt. Ausserdem wird auch hier der Patient zusätzlich belastet.

Aus der US 2003/0022132 A1 ist ein Instrument zur Erstellung einer Bohrung im Alveolarkamm bekannt, das an seinem distalen Ende eine als Stanzzylinder ausgebildete Hülse aufweist, welche an ihrem distalen Ende eine Schneidkante aufweist. Im Innenraum der Hülse ist ein Fräser angeordnet, der rotierend antreibbar ist und relativ zur Hülse axial vorgeschoben werden kann. Zur Erstellung der Bohrung im Alveolarkamm wird zunächst die Schneidkante der Hülse in die Gingiva eingestochen und vorgeschoben, bis sie auf dem Alveolarkamm aufsteht. Danach wird der Fräser rotierend angetrieben und relativ zur Hülse vorgeschoben. Dabei wird zunächst die Gingiva zerkleinert, bis der Fräser den Alveolarkamm erreicht und aus dem distalen Ende der Hülse herausragt. Beim weiteren axialen Vorschieben des Fräsers ragt dieser dann aus dem distalen Ende der Hülse heraus und es wird die Bohrung im Alveolarkamm erstellt.

Aus der JP H05-293124 ist eine Stanze gemäss dem Oberbegriff des unabhängigen Patentanspruchs bekannt.

Der vorliegenden Erfindung liegt die Aufgabe zugrunde liegt, eine Stanze zur Entnahme eines Gewebezylinders aus der Gingiva vorzuschlagen, welche die Nachteile des Standes der Technik nicht aufweist und ein leichtes Handling gestattet.

Diese Aufgabe wird durch die erfindungsgemässe Stanze, wie sie durch die Merkmale des unabhängigen Patentanspruchs charakterisiert ist, gelöst. Weitere Ausbildungen der erfindungsgemässen Stanze ergeben sich aus den Merkmalen der abhängigen Patentansprüche.

Mit Hilfe der ersten Angriffskontur im Bereich des distalen Endes der Sonde, die ja zur Eingriffskontur der zugehörigen Einheilkappe des Implantats korrespondiert, lässt sich bei geschlossener Gingiva die Stabilität des Implantats überprüfen, ohne dass die Gingiva eröffnet werden muss. Nach dem Auffinden der Bohrung mit der Sondenspitze wird zu diesem Zweck das distale Ende der Sonde weiter in die Bohrung der Einheilkappe hinein eingebracht, bis die erste Angriffskontur in Eingriff mit der Eingriffskontur in der Einheilkappe steht. Sodann kann ein Drehmoment bzw. eine Kraft auf das Implantat übertragen werden (z.B. in einer Richtung entgegengesetzt zur Ausdrehrichtung der Einheilkappe), sodass sich feststellen lässt, ob das Implantat genügend stabil im Kieferknochen verankert ist oder nicht. Dies kann mit der Sonde alleine, also ohne den Stanzzylinder erfolgen, was das Handling erleichtert.

Stellt sich heraus, dass das Implantat genügend stabil im Kieferknochen verankert ist, wird die Stelle markiert, an der die Sonde eingebracht ist, und die Sonde wird herausgezogen. Anschliessend wird die Sonde mit ihrem distalen Ende voraus am proximalen Ende des Stanzzylinders in dessen Durchgangsbohrung eingebracht und durch sie hindurch geführt, bis der distale Endbereich der Sonde aus dem distalen Ende des Stanzzylinders hervorsteht. Sodann wird mit der Sondenspitze erneut die Bohrung der Einheilkappe aufgesucht und das distale Ende der Sonde wird weiter in die Bohrung der Einheilkappe eingebracht, bis die erste Angriffskontur der Sonde in Eingriff mit der Eingriffskontur der Einheilkappe steht. Die Sonde - und damit auch der Stanzzylinder - ist nun zentriert. Da zuvor überprüft worden ist, dass das Implantat genügend stabil im Kieferknochen verankert ist, kann nun das Ausstanzen des Gewebezylinders aus der Gingiva erfolgen. Durch Ausdrehen (hier: Linksdrehen) der Sonde wird die Einheilkappe im Implantat gelöst und in den genau passenden (geringfügig grösseren), hohlzylindrischen Bereich am distalen Ende des Stanzzylinders hochgedrückt. Dadurch wird der über der Einheilkappe liegende, vom Stanzzylinder ausgestanzte Gewebezylinder (Gingiva) nach oben in die hohle Stanze transportiert. Ein Lösen des Gewebezylinders durch kräftiges Drehen und Drücken des Stanzzylinders auf den Knochen mit der Gefahr der Verletzung des wichtigen Knochenrandes ist dabei nicht notwendig. Auch wenn der Durchmesser des hohlzylindrischen Bereichs am distalen Ende des Stanzzylinders etwas kleiner ist als der Durchmesser der Einheilkappe, wird der Gewebezylinder durch Drehen des auf der Einheilkappe aufsitzenden Stanzzylinders ebenfalls ohne Knochenverletzung abgelöst. Dadurch werden Gingiva und Patient so gering wie möglich belastet.

Stellt sich beim Aufbringen des Drehmoments bzw. der Kraft mit Hilfe der Sonde auf das Implantat heraus, dass das Implantat noch nicht ausreichend stabil im Kieferknochen verankert ist, kann die Einheilphase verlängert werden, ohne dass die Gingiva des Patienten eröffnet werden muss. Somit wird der Patient minimal belastet.

Bei einem Ausführungsbeispiel der erfindungsgemässen Stanze kann die erste Angriffskontur der Sonde als Sechskant ausgebildet sein. Dies ermöglicht eine gute und gleichmässige Übertragung von Kräften bzw. Drehmomenten.

Bei einem weiteren Ausführungsbeispiel der erfindungsgemässen Stanze weist die Sonde im Bereich ihres proximalen Endes einen Kopf auf, der grösser ist als der Durchmesser der Durchgangsbohrung am proximalen Ende des Stanzzylinders. Der Kopf bildet somit einen Anschlag für die Sonde.

Der Kopf der Sonde kann auf seiner Aussenwand mit einer zweiten Angriffskontur versehen sein, wobei diese zweite Angriffskontur beispielsweise eine Rändelung sein kann, aber auch eine andere Kontur sein kann, die z.B. zum Zusammenwirken mit einem Werkzeug bestimmt sein kann, oder aber auch nur zum besseren Halten mit den Fingern dient.

Ebenso kann bei einem weiteren Ausführungsbeispiel der erfindungsgemässen Stanze der Stanzzylinder auf seiner Aussenwand mit einer Angriffskontur versehen sein, die ebenfalls als Rändelung ausgeführt sein kann, aber auch eine andere Kontur sein kann, die z.B. zum Zusammenwirken mit einem Werkzeug bestimmt sein kann oder einfach nur zum besseren Halten mit den Fingern dient.

Wiederum bei einem weiteren Ausführungsbeispiel kann der Stanzzylinder eine Querbohrung aufweisen, durch welche hindurch die in den Stanzzylinder eingebrachte stiftförmige Sonde erkennbar ist. Die Querbohrung ermöglicht das Anbringen einer Fadenschlaufe. Damit ist der Stanzzylinder gegen unbeabsichtigtes Verschlucken oder Einatmen (Aspiration) gesichert. In gleicher Weise kann eine entsprechende Querbohrung in der Sonde vorgesehen sein, die dem gleichen Zweck dient.

Weitere vorteilhafte Aspekte ergeben sich aus der nachfolgenden Beschreibung eines Ausführungsbeispiels der erfindungsgemässen Stanze mit Hilfe der Zeichnung. Es zeigen:
- Fig. 1: ein Ausführungsbeispiel eines Implantats,
- Fig. 2: ein Ausführungsbeispiel einer Einheilkappe für das Implantat aus Fig. 1,
- Fig. 3: ein Ausführungsbeispiel der erfindungsgemässen Stanze, zusammengesetzt,
- Fig. 4: die Sonde der Stanze aus Fig. 4, und
- Fig. 5: den Stanzzylinder der Stanze aus Fig. 4.

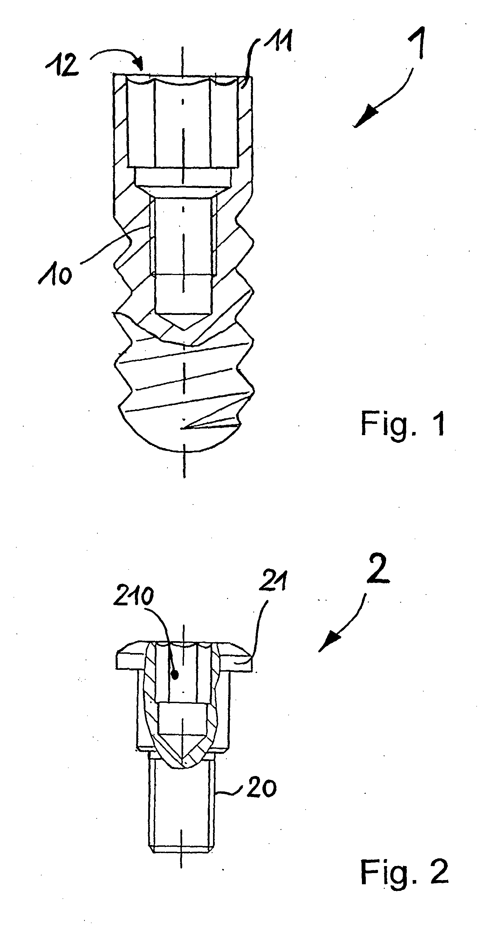

In **Fig. 1** ist ein Ausführungsbeispiel eines Implantats 1 dargestellt, welches in einem ersten Schritt im Kieferknochen eines Patienten verankert werden muss. Dazu wird zunächst die Gingiva chirurgisch (typischerweise durch Inzision mit Hilfe eines Skalpells) eröffnet und aufgeklappt, um den Kieferknochen gut zugänglich zu machen. Sodann erfolgt die Präparation des Kieferknochens (z.B. Bohren eines Sacklochs und Schneiden eines Gewindes für das Implantat). Nach erfolgter Präparation des Kieferknochens und Setzen des Implantats 1 wird eine Einheilkappe 2, wie sie beispielsweise in **Fig. 2** dargestellt ist, in eine Öffnung 12 am proximalen Ende des in Fig. 1 dargestellten Implantats 1 eingebracht. Zu diesem Zweck ist das Implantat mit einem Innengewinde 10 versehen und der Schaft der Einheilkappe 2 mit einem entsprechenden Aussengewinde 20. Nach erfolgtem Eindrehen der Einheilkappe 2 liegt der Kopf 21 der Einheilkappe 2 auf dem Rand 11 am proximalen Ende des Implantats 1 auf und deckt das Implantat 1 bündig ab. Die Einheilkappe 2 weist eine Eingriffskontur auf, die hier als Sechskant 210 ausgebildet ist, und deren Zweck weiter unten noch erläutert wird, wobei sich daran einen nach unten spitz zulaufende Vertiefung anschliesst. Nach dem Eindrehen der Einheilkappe 2 wird die Gingiva wieder verschlossen, sodass das Implantat 1 mitsamt der Einheilkappe 2 während der nachfolgenden Einheilphase subgingival in den Kieferknochen einheilen kann.

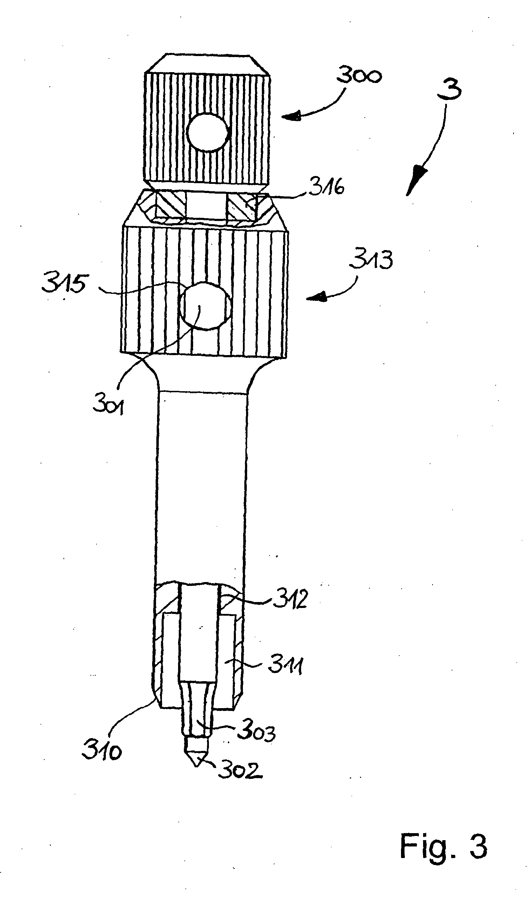

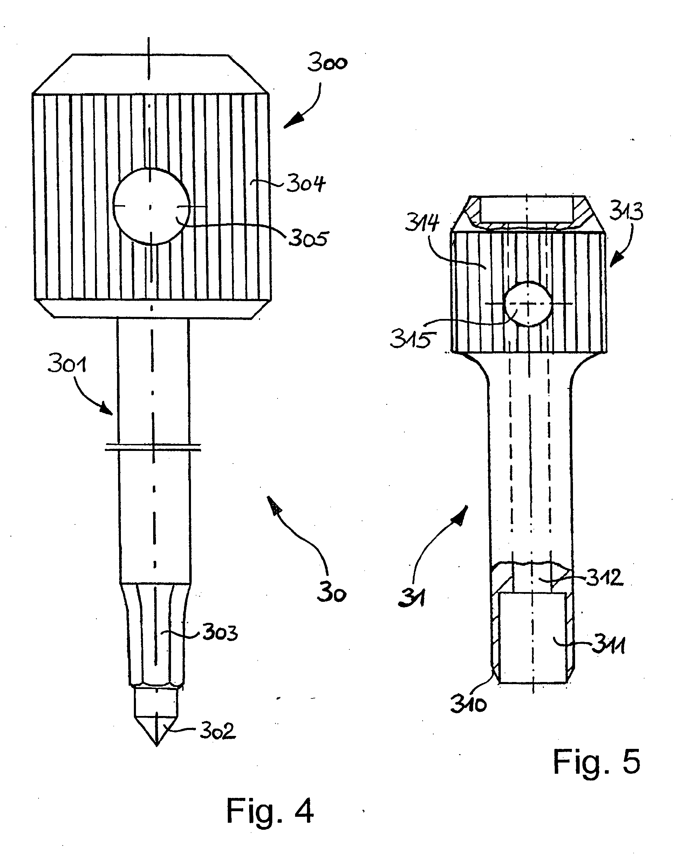

Am Ende der Einheilphase soll nun die weitere prothetische Versorgung erfolgen. Dabei kommt das nachfolgend anhand von **Fig. 3****,** **Fig. 4 und Fig. 5** erläuterte Ausführungsbeispiel der erfindungsgemässen Stanze 3 zum Einsatz. In **Fig. 3** ist die Stanze 3 zusammengesetzt dargestellt - sie umfasst eine stiftförmige Sonde 30 und einen Stanzzylinder 31 - während in **Fig. 4** die Sonde 30 und in **Fig.5** der Stanzzylinder 31 jeweils separat dargestellt sind. Ferner erkennt man noch einen farbkodierten Ring 316, dessen Farbe repräsentativ für den Durchmesser des Stanzzylinders 31 an dessen distalem Ende ist.

Die stiftförmige Sonde 30 weist im Bereich ihres proximalen Endes einen Kopf 300 und unterhalb des Kopfes einen Schaft 301 auf. An ihrem äussersten distalen Ende ist die Sonde 30 mit einer Sondenspitze 302 versehen. Von der Sondenspitze 302 aus in proximaler Richtung betrachtet schliesst sich im Bereich des distalen Endes eine erste Angriffskontur an, die hier die Form eines Sechskants 303 aufweist. Der Sechskant 303 verjüngt sich ganz leicht konisch in Richtung zum distalen Ende hin, was beim späteren Einführen des Sechskants 303 in den entsprechenden (zylindrischen) Sechskant 210 der Einheilkappe 2 (siehe Fig. 2) erleichtert. Der Kopf 300 im Bereich des proximalen Endes der Sonde 30 ist mit einer zweiten Angriffskontur versehen, hier beispielsweise in Form einer Rändelung 304. Diese Rändelung 304 dient dazu, den Kopf 300 besser mit den Fingern oder ggf. mit Hilfe eines geeigneten Werkzeugs halten zu können, wobei anstelle der Rändelung 304 auch eine andere geeignete Angriffskontur vorgesehen sein kann. Schliesslich erkennt man noch eine Querbohrung 305 im Kopf 300 der Sonde 30. Die Querbohrung 305 ermöglicht das Anbringen einer Fadenschlaufe, um die Sonde 30 gegen unbeabsichtigtes Verschlucken oder Einatmen (Aspiration) zu sichern.

Der Stanzzylinder 31 weist an seinem äussersten distalen Ende eine scharfe Schneide 310 auf. Weiterhin ist im Bereich seines distalen Endes eine Ausnehmung 311 vorgesehen, sodass der Stanzzylinder 31 im Bereich seines distalen Endes hohlzylindrisch ausgebildet ist. Eine Durchgangsbohrung 312 erstreckt sich vom proximalen Ende des Stanzzylinders 31 bis zur Ausnehmung 311, in welche die Durchgangsbohrung 312 einmündet. In der proximalen Hälfte ist am Stanzzylinder 31 ein zylindrischer Kopf 313 ausgebildet, der mit einer Angriffskontur in Form einer Rändelung 314 versehen ist, die auch hier dazu dient, ein besseres Halten mit den Fingern oder ggf. mit einem geeigneten Werkzeug zu ermöglichen, wobei erneut anstelle der Rändelung 314 eine andere geeignete Angriffskontur vorgesehen sein kann. Schliesslich erkennt man noch eine Querbohrung 315 im Kopf 313 des Stanzzylinders 31. Die Querbohrung 315 ermöglicht das Anbringen einer Fadenschlaufe, um den Stanzzylinder 31 gegen unbeabsichtigtes Verschlucken oder Einatmen (Aspiration) zu sichern.

Die Durchgangsbohrung 312 im Stanzzylinder 31 ermöglicht es, die Sonde 30 mit ihrem distalen Ende voraus am proximalen Ende des Stanzzylinders 31 in die Durchgangsbohrung 312 einzubringen und durch diese hindurchzuführen, bis das distale Ende der Sonde 30 aus dem distalen Ende des Stanzzylinders 31 herausragt. Diese Situation ist in Fig. 3 zu erkennen, in welcher die Stanze 3 zusammengesetzt dargestellt ist. Dadurch, dass der Kopf 300 der Sonde 30 grösser ist als der Durchmesser der Durchgangsbohrung 312 am proximalen Ende des Stanzzylinders 31, dient der Kopf 300 als Anschlag. Wichtig ist, dass bei vollständig eingebrachter Sonde 30 der Sechskant 303 (die erste Angriffskontur) wenigstens teilweise aus dem distalen Ende des Stanzzylinders hervorsteht, wie man in Fig. 3 erkennen kann.

Die Vorgehensweise im Anschluss an die Einheilphase erfolgt nun folgendermassen. Zunächst wird (selbstverständlich in Lokalanästhesie) mit der Sondenspitze 302 der Sonde 30 alleine (Fig. 4) durch die noch geschlossene Gingiva hindurch die Bohrung der Einheilkappe 2 aufgesucht. Ist diese aufgefunden, so wird das distale Ende der Sonde 30 weiter in die Bohrung der Einheilkappe 2 eingeführt, bis der Sechskant 303 der Sonde 30 mit dem Sechskant 210 der Einheilkappe in Eingriff gelangt. Sodann kann über die beiden Sechskante probeweise eine Kraft auf das Implantat 1 übertragen werden, oder es kann probeweise ein Drehmoment in einer Richtung entgegengesetzt zur Ausdrehrichtung der Einheilkappe 2 aufgebracht und so auf das Implantat 1 übertragen werden. Dadurch kann überprüft werden, ob das Implantat 1 ausreichend stabil im Kieferknochen verankert ist, ohne dass hierzu die Gingiva eröffnet werden muss.

Ist das Implantat 1 nicht ausreichend stabil verankert, wird die Einheilphase verlängert, und danach das Prozedere wiederholt. Ist das Implantat hingegen ausreichend stabil verankert, kann zunächst der Ort markiert werden, an dem die Sonde 30 positioniert ist, ggf. kann der Ort auch ohne Markierung wieder aufgefunden werden. Sodann kann die Sonde 30 aus der Bohrung der Einheilkappe 2 und aus der Gingiva herausgezogen werden. Die Sonde 30 wird nun vom proximalen Ende her in die Durchgangsbohrung 312 des Stanzzylinders 31 eingebracht und durch diese hindurchgeführt, bis die Stanze 3 die Konstellation aufweist, wie sie in Fig. 3 dargestellt ist. Sodann wird mit der Sondenspitze 302 erneut die Bohrung in der Einheilkappe 2 aufgesucht und die Sonde 30 wird weiter in die Bohrung der Einheilkappe 2 eingebracht, bis der Sechskant 303 der Sonde 30 in den Sechskant 210 der Einheilkappe 2 eingreift. Die Sonde 30 - und damit die Stanze 3 - ist somit in Bezug auf das Implantat 1 respektive die Einheilkappe 2 zentriert.

Sodann wird der Stanzzylinder 31 in Richtung der Gingiva bewegt, bis die Schneide 310 des Stanzzylinders 31 in die Gingiva eindringt und schliesslich über die Einheilkappe dringt bzw. auf der Einheilkappe 2 aufsteht. Der Durchmesser der Ausnehmung 311 im Bereich des distalen Endes des Stanzzylinders 31 ist zu diesem Zweck so bemessen, dass er genau dem Aussendurchmesser des Kopfs 21 der Einheilkappe 2 entspricht. Somit wird ein Gewebezylinder aus der Gingiva gestanzt, der genau so gross ist wie der Aussendurchmesser der Einheilkappe 2 und damit genau so gross wie der Aussendurchmesser des Implantats 1 an dessen proximalem Ende. Ausserdem wird überhaupt nur dann ein Gewebezylinder aus der Gingiva ausgestanzt, wenn feststeht, dass das Implantat 1 ausreichend stabil im Kieferknochen verankert ist.

Ist der Gewebezylinder aus der Gingiva ausgestanzt und entnommen, kann die Einheilkappe 2 aus dem Implantat 1 ausgedreht werden und die weitere prothetische Versorgung kann in konventioneller Weise erfolgen (Eindrehen eines "Abutments" in das Implantat 1, etc.).

Zu erwähnen ist noch, dass anstelle des Sechskants 303 als Angriffskontur der Sonde 30 und des korrespondierenden Sechskants 210 als Eingriffskontur der Einheilkappe 2 auch andere zueinander korrespondierende, nicht-rotationssymmetrische Angriffskonturen zum Einsatz kommen können. Vorstellbar sind hier insbesondere sogenannte Innen- bzw. Aussenvielrunds (verbreitet bekannt unter dem Namen TORX®), mit denen sich sehr gut Kräfte bzw. Momente übertragen lassen.

Ausserdem kann der Kopf der Einheilkappe 2 auf seiner Oberseite in seinem Randbereich eine umlaufende Vertiefung aufweisen, in welche die scharfe Schneide 310 eindringen kann, wenn der Durchmesser der Einheilkappe geringfügig grösser ist als der Durchmesser der Schneide 310 des Stanzzylinders 31.

## Patentansprüche

1. Stanze (3) zur Entnahme eines Gewebezylinders aus der Gingiva, mit einem Stanzzylinder (31), der an seinem äussersten distalen Ende eine Schneide (310) aufweist und zumindest im Bereich seines distalen Endes hohlzylindrisch (311) ausgebildet ist, und der ferner eine Bohrung (312) aufweist, die sich von seinem proximalen Ende ausgehend in axialer Richtung erstreckt, bis sie in den hohlzylindrisch ausgebildeten Bereich (311) des distalen Endes einmündet, sowie mit einer stiftförmigen Sonde (30), die so ausgebildet ist, dass sie derart in den Stanzzylinder eingebracht werden kann, dass ihr distales Ende aus dem distalen Ende des Stanzzylinders (31) herausragt, wobei die Sonde (30) im Bereich ihres distalen Endes eine zu einer Eingriffskontur (210) einer zugehörigen Einheilkappe (2) eines Implantats (1) korrespondierende erste Angriffskontur (303) aufweist, die so angeordnet ist, dass sie bei vollständig in den Stanzzylinder (31) eingebrachter Sonde (30) wenigstens teilweise aus dem distalen Ende des Stanzzylinders (31) hervorsteht, **dadurch gekennzeichnet, dass** die erste Angriffskontur am distalen Ende der Sonde nicht-rotationssymmetrisch ist, dass die Bohrung (312) des Stanzzylinders als Durchgangsbohrung ausgebildet ist, und dass die Sonde (30) so ausgebildet ist, dass sie mit ihrem distalen Ende voraus am proximalen Ende des Stanzzylinders (31) in dessen Durchgangsbohrung eingebracht und durch diese durchgeführt werden kann, bis ihr distales Ende aus dem distalen Ende des Stanzzylinders herausragt.

2. Stanze nach Anspruch 1, bei welcher die erste Angriffskontur als Sechskant (303) ausgebildet ist.

3. Stanze nach einem der vorangehenden Ansprüche, bei welcher die Sonde (30) im Bereich ihres proximalen Endes einen Kopf (300) aufweist, der grösser ist als der Durchmesser der Durchgangsbohrung (312) am proximalen Ende des Stanzzylinders (31).

4. Stanze nach Anspruch 3, bei welcher der Kopf (300) der Sonde (30) auf seiner Aussenwand mit einer zweiten Angriffskontur (304) versehen ist.

5. Stanze nach einem der vorangehenden Ansprüche, bei welcher der Stanzzylinder (31) auf seiner Aussenwand mit einer Angriffskontur (314) versehen ist.

6. Stanze nach einem der vorangehenden Ansprüche, bei welcher der Stanzzylinder (31) eine Querbohrung (315) aufweist.

7. Stanze nach einem der vorangehenden Ansprüche, bei welcher die Sonde (30) eine Querbohrung (305) aufweist.

## Claims

1. Punch for removing a tissue cylinder from the gingiva, comprising a punching cylinder (31) having a cutting edge (310) at its outermost distal end and being hollow-cylindrically (311) shaped at least in the region of its distal end, the punching cylinder further having a bore (312) extending in axial direction and starting at the proximal end of the punching cylinder until it merges into the hollow-cylindrically shaped portion (311) of the distal end, the punch further comprising a pin-shaped probe (30) which is configured such that it can be inserted in the punching cylinder in a manner such that its distal end protrudes from the distal end of the punching cylinder (31), wherein the probe (30) in the region of its distal end comprises a first engagement contour (303) corresponding to an engagement contour (210) of an associated healing cap (2) of an implant (1), the first engagement contour being arranged to at least partly protrude from the distal end of the punching (31) cylinder when the probe (30) is completely inserted in the punching cylinder (31), **characterized in that** the first engagement contour at the distal end of the probe is not rotationally symmetrical, **in that** the bore (312) of the punching cylinder is embodied as a through-bore, and **in that** the probe (30) is configured such that it can be inserted with its distal end first in the through-hole of the punching cylinder (31) at the proximal end thereof and passed through the through-bore until its distal end protrudes from the distal end of the punching cylinder.

2. Punch according to claim 1, wherein the first engagement contour is formed as a hexagon (303).

3. Punch according to anyone of the preceding claims, wherein the probe (30), in the region of its proximal end, comprises a head (300) which is larger than the diameter of the through-bore (312) at the proximal end of the punching cylinder (31).

4. Punch according to claim 3, wherein the head (300) of the probe (30) is provided with a second engagement contour (304) on its outer wall.

5. Punch according to anyone of the preceding claims, wherein the punching cylinder (31) is provided with an engagement contour (314) on its outer wall.

6. Punch according to anyone of the preceding claims, wherein the punching cylinder (31) comprises a transverse bore (315).

7. Punch according to any of the preceding claims, wherein the probe (30) comprises a transverse bore (305).

## Revendications

1. Poinçonneuse (3) pour le prélèvement d'un cylindre de tissu de la gencive, comprenant un cylindre de poinçonnage (31) qui présente, à son extrémité la plus distale, un bord de coupe (310) et qui est configuré, au moins dans la zone de son extrémité distale, en forme d'un cylindre creux (311) et qui présente en outre un alésage (312) qui s'étend à partir de son extrémité proximale en direction axiale jusqu'à ce qu'il débouche dans la partie de forme cylindrique creuse (311) de l'extrémité distale, la poinçonneuse de plus comprenant une sonde (30) en forme de tige qui est configurée de façon à pouvoir être insérée dans le cylindre de poinçonnage de telle manière que son extrémité distale dépasse l'extrémité distale du cylindre de poinçonnage (31), dans laquelle la sonde (30) présente au niveau de son extrémité distale un premier contour d'engagement (303) correspondant à un contour d'engagement (210) d'un capuchon de cicatrisation concordant (2) d'un implant (1), le premier contour d'engagement (303) étant arrangé de telle sorte que, lorsque la sonde (30) est complètement insérée dans le cylindre de poinçonnage (31), il dépasse au moins partiellement l'extrémité distale du cylindre de poinçonnage (31), **caractérisé en ce que** le premier contour d'engagement à l'extrémité distale de la sonde n'est pas symétrique en rotation, que la perforation (312) du cylindre de poinçonnage est formée par un alésage traversant et que la sonde (30) est formée de façon à ce qu'elle puisse être introduite avec son extrémité distale en avant dans l'alésage traversant à l'extrémité proximale du cylindre de poinçonnage (31), et que la sonde puisse être passée par l'alésage traversant jusqu'à ce que son extrémité distale dépasse l'extrémité distale du cylindre de poinçonnage.

2. Poinçonneuse selon la revendication 1, dans laquelle le premier contour d'engagement a la forme d'un hexagone (303).

3. Poinçonneuse selon l'une quelconque des revendications précédentes, dans laquelle la sonde (30) présente, dans la zone de son extrémité proximale, une tête (300) qui est plus grande que le diamètre de l'alésage (312) à l'extrémité proximale du cylindre de poinçonnage (31).

4. Poinçonneuse selon la revendication 3, dans laquelle la tête (300) de la sonde (30) est pourvue, sur sa paroi extérieure, d'un deuxième contour d'engagement (304).

5. Poinçonneuse selon l'une quelconque des revendications précédentes, dans laquelle le cylindre de poinçonnage (31) est pourvu, sur sa paroi extérieure, d'un contour d'engagement (314).

6. Poinçonneuse selon l'une quelconque des revendications précédentes, dans laquelle le cylindre de poinçonnage (31) présente un alésage transversal (315).

7. Poinçonneuse selon l'une quelconque des revendications précédentes, dans laquelle la sonde (30) présente un alésage transversal (305).
